# EUROPÄISCHE PATENTSCHRIFT

(11) **EP 0 521 269 B1**
(45) Veröffentlichungstag und Bekanntmachung des Hinweises auf die Patenterteilung: **21.12.1994**
(21) Anmeldenummer: 92107937.2
(22) Anmeldetag: 12.05.1992
(51) Int. Cl.: B60H 1/00

(54) **Bugseitiges Heiz- oder Klimagerät in einem Omnibus**
Heating or air-conditioning device in the frontside of an omnibus
Dispositif de climatisation ou chauffage dans le côté avant d'un omnibus

(30) Priorität: 03.07.1991 DE 4122013
(43) Veröffentlichungstag der Anmeldung: 07.01.1993
(73) Patentinhaber: MERCEDES-BENZ AG, 70327 Stuttgart (DE)
(72) Erfinder: Förster, Alfred, Ing.-grad., W-7056 Weinstadt (DE); Kalt, Hans-Peter, Dipl.-Ing., W-7036 Schönaich (DE); Moll, Ulrich, Dipl.-Ing. (FH), W-7031 Aidlingen (DE); Schanzer, Hans-Peter, Dipl.-Ing., W-7120 Bietigheim-Bissingen (DE); Schopper, Hans-Dieter, Dipl.-Ing., W-7037 Magstadt (DE); Lüders, Michael, Dipl.-Ing., W-7046 Gäufelden (DE); Schmehlik, Ludwig, Dipl.-Ing. (FH), W-7000 Stuttgart 61 (DE)

(56) Entgegenhaltungen:
- DE-A- 2 619 917
- DE-A- 2 843 746
- DE-A- 3 342 653
- GB-A- 2 155 171

## Beschreibung

Die Erfindung betrifft ein bugseitiges Heiz- oder Klimagerät in einem Omnibus, mit einer wenigstens ein Gebläse und einen Wärmetauscher aufweisenden Baueinheit und einem Luftverteilerraum im Anschluß an den Wärmetauscher, vor dem aus die Luft zu im Bereich der Armaturentafel angeordneten Luftauslässen geführt wird und mit einem frontseitigen Lufteinlaß, der im Wechsel mit einer Umluftzuführung verschließbar ist.

Eine derartige, durch die DE-CA-28 43 746 bekannte Einrichtung, die der Armaturentafel in deren mittlerem Abschnitt zugeordnet ist, ist in einem recht voluminösen Kasten untergebracht, der gerade in einem Bereich relativ viel Bauraum beansprucht, der besonders bei Omnibussen durch andere, den Komfort für die Fahrgäste steigernde Aggregate wie z.B. ein Kühlschrank oder eine Videoanlage besser nutzbar wäre. Das mindestens eine Gebläse der Einrichtung stellt wegen seiner innenraumnahen Unterbringung eine mitunter störende Geräuschquelle dar, die nur durch den Bauraum noch weiter vergrößernde schallabsorbierende Maßnahmen weitgehend ausschaltbar ist. Weiterhin ist nachteilig, daß bei Inspektions- und Reparaturarbeiten die Gefahr einer Verschmutzung des Innenraumes gegeben ist.

Es ist Aufgabe der Erfindung, eine leicht montierbare und wartbare, ein bugseitiges Heiz- oder Klimagerät beinhaltende Baueinheit zu schaffen, die im Innenraum nur einen geringen Bauraum beansprucht und die unter Ausnutzung kurzer Luftwege hinsichtlich Luftkonditionierung und Laufruhe auch hohen Ansprüchen gerecht wird.

Diese Aufgabe wird bei einem bugseitigen Heiz- oder Klimagerät nach dem Oberbegriff des Patentanspruches 1 durch dessen kennzeichnende Merkmale gelöst.

Durch die DE-CA-28 43 746 ist es zwar bereits auch schon bekannt, einen ein Gebläse und einen Wärmetauscher aufweisenden Heizkasten als Baueinheit unterflur anzuordnen, jedoch geht dadurch wegen der Unterbringung in den Gepäckabteilen Stauraum verloren. Außerdem besteht die Gefahr, daß bei großer Auslastung der Gepäckabteile die Luftzufuhr der vom Fahrgastraum eintretenden Luft zum Gebläse hin gestört ist und somit die auslegungsgemäße Leistung der Einrichtung nicht erreicht wird.

Bei einem bevorzugten Ausführungsbeispiel der Erfindung besteht das Grobfilter zumindest aus einem wasserabscheidenden Skelettschaum und ist nach dem Öffnen einer frontseitigen Wartungsklappe zugänglich und entnehmbar. Durch Einbeziehung des Grobfilters in den periodisch durchzuführenden Inspektions- und Wartungsumfang ist gewährleistet, daß die Frischluftzufuhr zum Heiz- oder Klimagerät störungsfrei erfolgen kann.

Ein kurzer Umluftansaugweg mit geringem Strömungswiderstand ist erreichbar, wenn die dem vorderen Einstieg zugekehrte Seitenwand der Baueinheit in ihrem rückwärtigen Bereich mit einer verschließbaren Umluft-Ansaugöffnung versehen ist, der vorzugsweise gefilterte Luft von einer Luftansaugöffnung im Stufenbereich des vorderen Einstiegs zuführbar ist.

Zur Schaffung eines baugleichen Gehäuses bei unterschiedlichen Komfortstufen, wird bei einem Ausführungsbeispiel der Erfindung zwischen dem Gebläse und einem sich an die Umluft-Ansaugöffnung anschließenden Raum eine Schottwand eingeschoben, so daß ein Umluftübertritt zum kanalförmigen Gehäuse erfolgt, wobei die aus zwei starr miteinander gekoppelten Klappenhälften bestehende Klappenanordnung so im Luftübertrittsbereich vom kanalförmigen Gehäuse zum Gebläse angeordnet ist, daß das kanalförmige Gehäuse wahlweise in einen Frischluft oder Umluft zuführenden Kanalabschnitt unterteilbar ist.

Bei einem anderen Ausführungsbeispiel mit höherer Komfortstufe ist zwischen dem Gebläse und einem sich an die Umluft-Ansaugöffnung anschließenden Raum ein Geruchsfilter, insbesondere Aktivkohlefilter eingefügt und die Klappenanordnung besteht aus einer ersten, ungekoppelten zweiflügeligen Klappe im Luftübertrittsbereich vom kanalförmigen Gehäuse zum Gebläse, die in zwei ersten Betriebsstellungen unter Umgehung des Geruchsfilters wahlweise Frischluft oder Umluft dem Gebläse auf direktem Wege zuleitet und die in einer weiteren Betriebsstellung einen direkten Luftstrom zum Gebläse unterbindet und im Zusammenwirken mit einer zweiten, den Luftübertritt vom sich an die Umluft-Ansaugöffnung anschließenden Raum zu einem Kanalabschnitt wahlweise freigebenden oder verschließbaren Klappe dem Gebläse über den Geruchsfilter entweder Frischluft oder Umluft zuführt.

Durch Verwendung von Stellantrieben können die Klappen leicht automatisch gesteuert werden, wobei im Lüftungs- und Heizbetrieb überwiegend mit Frischluft und im Kühlbetrieb im Bedarfsfall mit einem geringeren oder größeren Umluftanteil gefahren werden kann. Im Frischluft-Ansaugtrakt kann ein Geruchsfühler plaziert werden, der veranlaßt, daß bis zu einer minimalen Geruchsbelastung im Lüftungs- und Heizbetrieb unter Umgehung des Geruchsfilters dem bzw. den Gebläsen Frischluft auf direktem Wege zugeführt wird. Bei auftretender Geruchsbelästigung wird die Frischluft dann über den Geruchsfilter geleitet. Bei starker Geruchsbelästigung kann zur Standzeitverlängerung des Geruchsfilters auf Umluftbetrieb übergegangen werden, wobei erst bei länger andauerndem Betrieb der Geruchsfilter eingeschaltet wird. Der Zeitpunkt zur Umschaltung auf Filterbetrieb kann dabei durch einen weiteren Geruchsfühler im Umlaufansaugweg bestimmt werden.

Zwei Ausführungsbeispiele der Erfindung werden nachfolgend anhand der Zeichnung näher erläutert. Es zeigt:
- Fig. 1: einen vereinfachten Längsschnitt eines im Frontbereich unterflur und oberhalb eines Reserverades untergebrachten Heiz- oder Klimagerätes ohne Geruchsfilter bei Frischluftbetrieb,
- Fig. 2: die Klappenstellung beim Ausführungsbeispiel nach Fig. 1 bei Umluftbetrieb,
- Fig. 3: den Frischluftverlauf im Bereich der Klappen bei eingesetztem und eingeschaltetem Geruchsfilter und
- Fig. 4: die Klappenstellung bei Umluftbetrieb und durchströmtem Geruchsfilter.

Unterhalb des frontseitigen Endes eines nur angedeuteten Mittelganges 1 und oberhalb eines liegend aufgenommenen, gleichfalls nur angedeuteten Reserverades 2 eines nicht näher dargestellten Omnibusses erstreckt sich ein Raum 3, der ein als Baueinheit 4 ausgebildetes Bugklimagerät aufnimmt. Bei entnommenem Reserverad 2 und geöffneter frontseitiger Wartungsklappe 5 wird die Baueinheit 4 mit dem unterseitig an diese angehängten und bei Bedarf nach unten schwenkbaren Gehäuse 6 von der Frontseite 7 her eingefahren und über an der Baueinheit 4 befestigte Zapfen 8 in fahrzeugfeste Lagerschalen 9 eingehängt. Mittels von der Frontseite 7 aus bequem erreichbarer Befestigungselemente 10, von denen nur eines angedeutet ist, wird die Baueinheit 4 lösbar an einem fahrzeugfesten Teil 11 festgelegt und dann in nicht gezeigter Weise mit dem Heizwasser- und Kältekreis gekuppelt und an das Bordnetz angeschlossen.

In der Baueinheit 4 sind, von der Frontseite 7 her gesehen, hintereinander zwei Wärmetauscher 12 und 13 angeordnet, wobei der Wärmetauscher 12 einen Heizwärmetauscher und der Wärmetauscher 13 einen Verdampfer darstellt. Auf den Wärmetauscher 13 folgen Gebläse 14, von denen nur eines gezeigt ist. Eine z.B. aus einem geschlossenzelligem Schaumstoff bestehende Schottwand 15 trennt einen Raum 16 ab, der in einer Seitenwand 17 eine durch eine Klappe 18 verschließbare Umluft-Ansaugöffnung 19 aufweist. Die Umluft wird in nicht wiedergegebener Weise unter Zwischenschaltung eines Filters über eine Luftansaugöffnung im nahegelegenen Stufenbereich des vorderen Einstiegs angesaugt, wobei die Luftansaugöffnung durch ein wasserabscheidendes Gitter mit nachgeschalteten, eine Rückluftsperre darstellenden Rückschlagklappen gebildet wird.

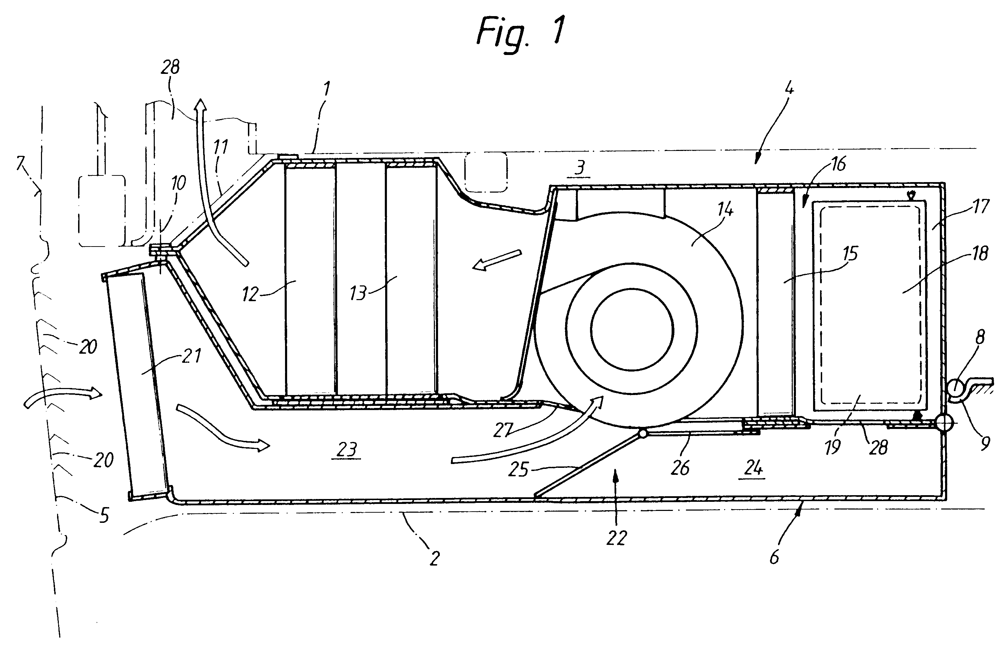

Wie in Fig. 1 durch Pfeile angedeutet, strömt Frischluft durch einen frontseitigen Lufteinlaß 20 der Wartungsklappe 5 zu einem lufteintrittsseitig des Gehäuses 6 leicht lösbar aufgenommenen Grobfilter 21, das aus Skelettschaum mit wasserabscheidenden Eigenschaften und aus einem Partikelvorfilter besteht. Im Anschluß an das Grobfilter 21 bildet das Gehäuse 6, unterteilt durch eine Klappenanordnung 22, einen Frischluft führenden Kanalabschnitt 23 und einen umlaufbeaufschlagten Kanalabschnitt 24. Die Klappenanordnung 22 besteht aus zwei starr miteinander gekoppelten Klappenhälften 25 und 26, die schwenkbar etwa mittig unterhalb eines Luftzutritts 27 zu den Gebläsen 14 angeordnet sind.

Im Frischluftbetrieb nach Fig. 1 trennt die Klappenhälfte 25 den Kanalabschnitt 23 vom Kanalabschnitt 24 ab und die Klappenhälfte 26 verschließt den halben Querschnitt des Luftzutritts 27, so daß die Frischluft zu den Gebläsen 14 abströmt und danach die beiden Wärmetauscher 13 und 12 passiert, um danach in einen angedeuteten Luftverteilraum 28 einzutreten, der kaminartig zur nicht dargestellten Armaturentafel hochgeführt. Über gleichfalls nicht gezeigte Luftauslässe wird der Bugbereich in bekannter Weise mit Luft versorgt.

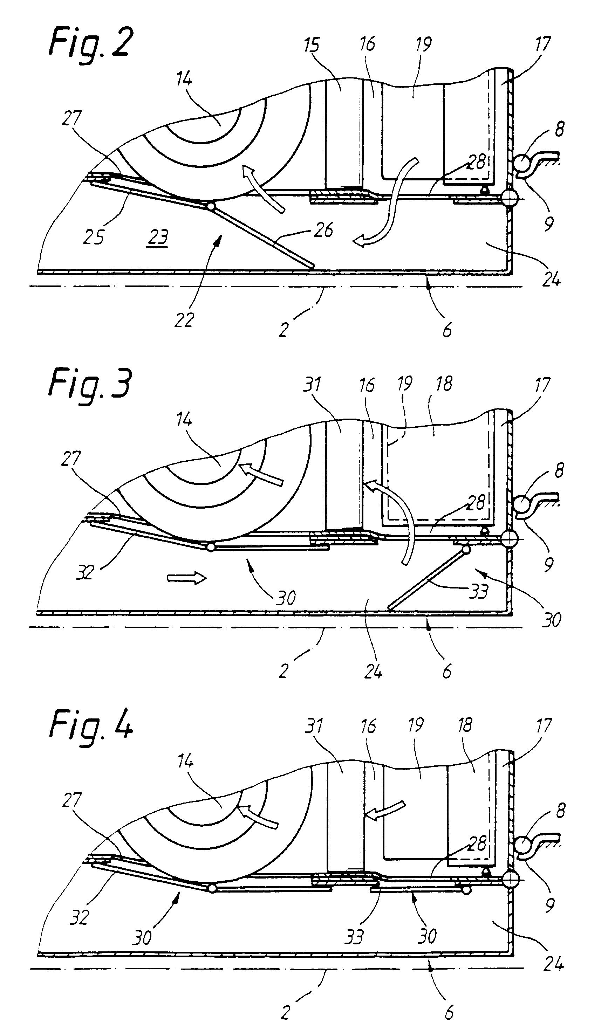

Wird die Klappenanordnung 22 aus der Stellung nach Fig. 1 in die Lage nach Fig. 2 gebracht, was bei auftretender Geruchsbelästigung z.B. sensorgesteuert und im Klimabetrieb durch einen Stellantrieb erfolgen kann, so trennt nunmehr die Klappenhälfte 26 die beiden Kanalabschnitte 23 und 24 voneinander ab, während die Klappenhälfte 25 den vorn liegenden halben Querschnitt des Luftzutritts 27 abschließt. Ein Zutritt von Frischluft wird somit verhindert und Umluft strömt aus dem Raum 16 durch eine Öffnung 28 in der Baueinheit 4 und im Gehäuse 6 in den Kanalabschnitt 24 ein. Wie in bereits beschriebener Weise erfolgt dann eine Luftförderung durch die Gebläse 14 bis zu den Luftauslässen im Armaturentafelbereich.

Das Ausführungsbeispiel nach den Fig. 3 und 4 unterscheidet sich von dem nach den Fig. 1 und 2 lediglich durch eine andere Klappenanordnung und den Einsatz eines Geruchsfilters 31, so daß für artgleiche Teile gleiche Positionsnummern verwendet werden. Die Klappenanordnung 30 besteht aus einer ersten zweiflügeligen Klappe 32, deren Flügel nicht wie beim Ausführungsbeispiel nach Fig. 1 und 2 zwangsgekoppelt sind. Gleichwohl läßt sich durch entsprechende, nicht dargestellte Verstellmechanismen die in den vorgenannten Figuren gezeigte Klappenstellung verwirklichen, wobei jedoch eine zweite, zur Klappenanordnung 30 gehörende Klappe 33 jeweils in ihrer in Fig. 3 gezeigten Offenstellung steht. Wegen der dabei herrschenden Strömungsverhältnisse wirkt der nicht durchströmte Geruchsfilter 31, der zweckmäßigerweise als Aktivkohlefilter ausgebildet ist, wie die Schottwand 15 nach den Fig. 1 und 2.

Im Frischluft-Geruchsfilterbetrieb nach Fig. 3 verschließt die zweiflügelige Klappe 32 den Luftzutritt 27 ganz, so daß die Frischluft durch die Öffnung 28 in den umluftseitig geschlossenen Raum 16 und zum Geruchsfilter 31 gelangt. Die von Gerüchen befreite Luft strömt dann zu den Gebläsen 14 und in bereits mehrfach beschriebener Weise zu den endseitigen Luftauslässen. Die Geruchserkennung und das Signal zum Verstellen der Klappenanordnung kann durch einen Sensor mit nachgeschalteter Auswertelektronik erfolgen, wobei beim überschreiten einer vorbestimmten Geruchsschwelle zur Erhöhung der Standzeit des Geruchsfilters 31 auf Umluftfilterbetrieb nach Fig. 4 oder vorübergehend auch auf einfachen, filterlosen Umluftbetrieb nach Fig. 2 umgeschaltet werden kann. Wird im Umluftfilterbetrieb gefahren, so wird die Öffnung 28 durch die Klappe 33 verschlossen.

Zur Inspektion des Grobfilters 21 genügt es, die Wartungsklappe 5 zu öffnen, die in der Regel auch Zugang zu anderen der Inspektion bedürfenden Einrichtungen wie Scheibenwaschbehälter und sonstigen Vorratsbehältnissen schafft. Zu Wartungsarbeiten und etwaigen Reparaturarbeiten am Klimagerät wird zunächst das Reserverad 2 entnommen und das Gehäuse 6 abgeklappt und ausgehoben, nachdem nicht gezeigte Steckverbindung zu den die gehäuseseitig angebrachten Klappenanordnung 22 bzw. 30 bewegenden Stellelementen gelöst sind. Die Gebläse 14 sind nun frei zugänglich und die Wärmetauscher 12 und 13 sowie der Geruchsfilter 31 können nach dem Entfernen nicht näher dargestellter Halterungen nach unten herausgenommen werden, wobei die Länge der Versorgungsschläuche der Wärmetauscher 12 und 13 so bemessen ist, daß diese Aggregate zu Reinigungszwecken herausgenommen werden können, ohne daß Verbindungen zu lösen sind. Bei den Säuberungsarbeiten ist die Gefahr einer Innenraumverschmutzung ausgeschlossen, so daß auch zur Vereinfachung der Arbeiten eine Säuberung z.B. mittels eines Dampf- oder Wasserstrahles erfolgen kann.

## Patentansprüche

1. Bugseitiges Heiz- oder Klimagerät in einem Omnibus, mit einer wenigstens ein Gebläse (14) und einen Wärmetauscher aufweisenden Baueinheit (4) und einem Luftverteilraum (28) im Anschluß an den Wärmetauscher (12,13), von dem aus die Luft zu im Bereich der Armaturentafel angeordneten Luftauslässen geführt wird und mit einem frontseitigen Lufteinlaß (20), der im Wechsel mit einer Umluftzuführung verschließbar ist,
**dadurch gekennzeichnet,**
daß die Baueinheit (4) unterflur von der Frontseite (7) her bei nicht eingeschobenem Reserverad (2) einhängbar oberhalb des vom Reserverad beanspruchten Raums (3) aufgenommen wird und daß unterhalb der Baueinheit (4) ein dessen nach unten ausbaubare Aggregate wie Wärmetauscher (12, 13) und Gebläse (14) abdeckendes, nach unten schwenkbares und entnehmbares Gehäuse (6) angeordnet ist, das neben einer den Frischluft-/Umluftstrom regulierenden Klappenanordnung (22; 30) auch ein lufteintrittsseitig plaziertes Grobfilter (21) aufweist.

2. Bugseitiges Heiz- oder Klimagerät nach Anspruch 1,
**dadurch gekennzeichnet,**
daß das Grobfilter (21) zumindest aus einem wasserabscheidenden Skelettschaum besteht, das durch eine frontseitige Wartungsklappe (5) zugänglich und entnehmbar ist.

3. Bugseitiges Heiz- oder Klimagerät nach den Ansprüchen 1 und 2,
**dadurch gekennzeichnet,**
daß die dem vorderen Einstieg zugekehrte Seitenwand (17) der Baueinheit (4) in ihrem rückwärtigen Bereich mit einer verschließbaren Umluft-Ansaugöffnung (19) versehen ist, der vorzugsweise gefilterte Luft von einer Luftansaugöffnung im Stufenbereich des vorderen Einstiegs zuführbar ist.

4. Bugseitiges Heiz- oder Klimagerät nach Anspruch 3,
**dadurch gekennzeichnet,**
daß zwischen dem Gebläse (14) und einem sich an die Umluft-Ansaugöffnung (19) anschließenden Raum (16) eine Schottwand (15) eingeschoben ist, so daß ein Umluftübertritt zum kanalförmigen Gehäuse (6) erfolgt und daß die aus zwei starr miteinander gekoppelten Klappenhälften (25, 26) bestehende Klappenanordnung (22) so im Luftübertrittsbereich vom kanalförmigen Gehäuse (6) zum Gebläse (14) angeordnet ist, daß das kanalförmige Gehäuse (6) wahlweise in einen Frischluft oder Umluft führenden Kanalabschnitt (23; 24) unterteilbar ist.

5. Bugseitiges Heiz- oder Klimagerät nach Anspruch 3,
**dadurch gekennzeichnet,**
daß zwischen dem Gebläse (14) und einem sich an die Umluft-Ansaugöffnung (19) anschließenden Raum (16) ein Geruchsfilter (31), insbesondere Aktivkohlefilter eingefügt ist und daß die Klappenanordnung (30) aus einer ersten, ungekoppelten zweiflügeligen Klappe (32) im Luftübertrittsbereich vom kanalförmigen Gehäuse (6) zum Gebläse (14) besteht, die in zwei ersten Betriebsstellungen unter Umgehung des Geruchsfilters (31) wahlweise Frischluft oder Umluft dem Gebläse (14) auf direktem Wege zuleitet und die in einer weiteren Betriebsstellung einen direkten Luftstrom zum Gebläse (14) unterbindet und im Zusammenwirken mit einer zweiten, den Luftübertritt vom sich an die Umluft-Ansaugöffnung (19) anschließenden Raum (16) zu einem Kanalabschnitt (24) wahlweise freigebenden oder verschließbaren Klappe (33) dem Gebläse (14) über den Geruchsfilter (31) entweder Frischluft oder Umluft zuführt.

## Claims

1. A heating or air conditioning device located in the front of a bus consisting of a modular unit (4) containing at least one fan (14) and one heat exchanger and one air diffusion chamber (28) after the heat exchangers (12, 13) from which the air is fed to air outlets located on the dashboard and with a front-mounted air inlet (20) which can be closed alternately with the circulating air feed,
**characterised in that**
when the spare wheel (2) is not in place the modular unit (4) can be introduced under the floor from the front (7) and suspended above the space (3) taken up by the spare wheel and that beneath the modular unit (4) there is a housing (6) covering the units such as the heat exchangers (12, 13) and fan (14) which can be removed from below, which itself folds down and can be removed from below, consisting of a flap arrangement (22; 30) which regulates the flows of fresh and circulating air and a coarse filter (21) on the air intake side.

2. A front-mounted heating or air conditioning device as described in claim 1,
**characterised in that**
the coarse filter (21) consists of at least one water-separating foam part, is accessible via a front-mounted maintenance flap (5) and is removable.

3. A front-mounted heating or air conditioning device as described in claims 1 and 2,
**characterised in that**
the rear part of the side wall (17) of the modular unit (4) facing the front entrance is fitted with a closable circulating air intake opening (19) to which preferably filtered air can be supplied from an air intake opening in the area of the steps leading up to the front entrance.

4. A front-mounted heating or air conditioning device as described in claim 3,
**characterised in that**
a partition wall is positioned between the fan (14) and a chamber (16) after the circulating air intake opening (19) in such a way as to create an overflow of air into the channel-shaped housing (6) and that the flap arrangement (22) consisting of two rigidly connected flap sections (25. 26) is located within the air overflow area between the channel-shaped housing (6) and the fan (14) in such a way that the channel-shaped housing (6) can be divided to form sections for the supply of fresh air or circulating air (23; 24).

5. A front-mounted heating or air conditioning device as described in claim 3,
**characterised in that**
an odour filter (31), in particular an activated carbon filter, is fitted between the fan (14) and a chamber (16) after the circulating air intake opening (19) and that the flap arrangement (30) consists of a first, unconnected, two-blade flap (32) in the air overflow area between the channel-shaped housing (6) and the fan (14) which, in two initial operating positions, bypasses the odour filter (31) and feeds fresh or circulating air directly to the fan (14), and, in a further operating position, prevents the direct flow of air to the fan (14) and supplies either fresh air or circulating air to the fan (14) via the odour filter (31) in conjunction with a second flap (33) which opens or closes the air overflow from the chamber (16) after the circulating air intake opening (19) to one section of the channel (24).

## Revendications

1. Appareil de chauffage ou de climatisation du côté avant dans un omnibus, comprenant une unité de montage (4) qui présente au moins un ventilateur (14) et un échangeur de chaleur, ainsi qu'un espace de distribution d'air (28) à la suite de l'échangeur de chaleur (12, 13), espace à partir duquel l'air est envoyé vers des sorties d'air placées dans la zone du tableau de bord, de même qu'une admission d'air frontale (20) pouvant être fermée en alternance avec une amenée d'air recyclé,
caractérisé en ce
que l'unité de montage (4) est reçue, sous le plancher, à partir du côté frontal (7) et de manière qu'elle puisse être suspendue, alors que la roue de secours (2) n'a pas été glissée en place, au-dessus de l'espace (3) nécessaire pour loger la roue de secours, et que, au-dessous de l'unité de montage (4), est disposé un carter (6) qui recouvre des organes de cette unité qui sont démontables vers le bas, tels que l'échangeur de chaleur (12, 13) et le ventilateur (14), carter (6) qui est inclinable vers le bas et amovible et qui présente aussi, à côté d'un système de clapet (22; 30) régulant le débit d'air frais/air recyclé, un filtre grossier (21) placé du côté de l'entrée d'air.

2. Appareil de chauffage ou de climatisation avant, selon la revendication 1, caractérisé en ce que le filtre grossier (21) est formé au moins d'une mousse à cellules ouvertes, séparatrice d'eau, qui est accessible et amovible à travers une trappe frontale d'entretien (5).

3. Appareil de chauffage ou de climatisation avant, selon les revendications 1 et 2, caractérisé en ce que la paroi latérale (17) de l'unité de montage (4), paroi qui est dirigée vers l'entrée avant du véhicule, est pourvue dans sa partie arrière d'une ouverture obturable (19) d'aspiration d'air recyclé, à laquelle peut être amené de l'air, de préférence filtré, à partir d'une ouverture d'aspiration d'air située dans la zone des marches de l'entrée avant.

4. Appareil de chauffage ou de climatisation avant, selon la revendication 3, caractérisé en ce que qu'une cloison (15) est insérée entre le ventilateur (14) et l'espace (16) se raccordant à l'ouverture (19) d'aspiration d'air recyclé, de sorte que s'effectue un transfert d'air recyclé vers le carter (6) en forme de canal, et que le système de clapet (22), constitué de deux moitiés de clapet (25, 26) couplées rigidement l'une à l'autre, est disposé dans la zone de transfert d'air depuis le carter (6) en forme de canal vers le ventilateur (14), de manière que ce carter (6) soit divisible sélectivement de façon à y délimiter un tronçon de canal (23) traversé d'air frais ou un tronçon de canal (24) traversé d'air recyclé.

5. Appareil de chauffage ou de climatisation avant, selon la revendication 3, caractérisé en ce qu'un filtre désodorisant (31), en particulier un filtre au charbon actif, est inséré entre le ventilateur (14) et un espace (16) se raccordant à l'ouverture (19) d'aspiration d'air recyclé, et que le système de clapet (30) est constitué d'un premier clapet (32) non couplé, à deux battants, placé dans la zone de transfert d'air depuis le carter (6) en forme de canal vers le ventilateur (14), clapet qui, en deux premières positions de fonctionnement, avec contournement du filtre désodorisant (31), dirige sélectivement et directement de l'air frais ou de l'air recyclé vers le ventilateur (14) et qui, en une position de fonctionnement supplémentaire, empêche un courant d'air direct vers le ventilateur (14) et envoie à celui-ci, à travers le filtre désodorisant (31), de l'air frais ou de l'air recyclé en coopération avec un second clapet (33) qui autorise ou empêche sélectivement le transfert d'air depuis l'espace (16) se raccordant à l'ouverture (19) d'aspiration d'air recyclé vers un tronçon de canal (24).
